# EUROPEAN PATENT APPLICATION

(11) **EP 4 604 566 A1**
(43) Date of publication of application: **20.08.2025**
(21) Application number: 24808529.2
(22) Date of filing: 14.11.2024
(51) Int. Cl.: H04N 23/741, H04N 23/73, H04N 23/57, G06T 5/50, G06T 7/215, H04N 5/92, H04N 5/77, G09G 5/10

(54) **ELECTRONIC DEVICE FOR GENERATING METADATA FOR ENHANCING BRIGHTNESS OF DISPLAY THAT DISPLAYS IMAGE, AND METHOD THEREFOR**

(30) Priority: 02.01.2024 KR 20240000573; 16.01.2024 KR 20240007059
(71) Applicant: Samsung Electronics Co., Ltd, Suwon-si, Gyeonggi-do 16677 (KR)
(72) Inventor: KIM, Unggyu, Suwon-si Gyeonggi-do 16677 (KR); LEE, Minwoo, Suwon-si Gyeonggi-do 16677 (KR); LEE, Seoyoung, Suwon-si Gyeonggi-do 16677 (KR); KIM, Donghwy, Suwon-si Gyeonggi-do 16677 (KR); KIM, Kwangtai, Suwon-si Gyeonggi-do 16677 (KR); YEOM, Donghyun, Suwon-si Gyeonggi-do 16677 (KR)
(74) Representative: Gulde & Partner
(86) International application number: PCT/KR2024/017989
(87) International publication number: WO 2025/146931

(57) **Abstract**

An electronic device according to an embodiment obtains a plurality of first images including brightness values respectively having a first gray scale from at least one camera, in response to a photographing input. The electronic device determines an image among the plurality of first images as a second image for generating map information, by using information associated with motion within a time section when the plurality of first images were captured. The electronic device generates map information using the second image. The electronic device generates metadata including the map information and a file including the second image.

## Description

### [Technical Field]

The present disclosure relates to an electronic device generating metadata for enhancing brightness of a display displaying an image and a method thereof.

### [Background Art]

Digital information (e.g., an image file having a format of a joint photographic experts group (JPEG) and/or a moving picture experts group (MPEG)) generated to visualize an image, and/or a video may be generated to indicate a color using a limited number of bits. For example, in the digital information, brightness of a specific primary color (e.g., a primary color among red, green, or blue) may be stored using eight bits. In the example, the digital information may be generated to indicate the brightness of the specific primary color using brightness levels a total of 256 (= 2⁸) steps.

The above-described information may be provided as a related art for the purpose of helping to understand the present disclosure. The above-described information may not be claimed as prior art related to the present disclosure or used in determination related to the prior art.

### [Disclosure]

### [Technical Solution]

According to an embodiment, an electronic device may comprise at least one camera, at least one processor comprising processing circuitry, and memory comprising one or more storage media storing instructions. The instructions that, when executed by the at least one processor individually or collectively, may cause the electronic device to, in response to a shooting input, obtain a plurality of first images including brightness values respectively having a first gray scale from the at least one camera. The instructions that, when executed by the at least one processor individually or collectively, may cause the electronic device to, by using information associated with motion in a time section when the plurality of first images were captured, determine an image among the plurality of first images as a second image to generate map information. The instructions that, when executed by the at least one processor individually or collectively, may cause the electronic device to generate the map information using the second image. The instructions that, when executed by the at least one processor individually or collectively, may cause the electronic device to generate a file including metadata including the map information and the second image.

In an embodiment, a method of an electronic device comprising at least one camera may be provided. The method may comprise, in response to a shooting input, obtaining a plurality of first images including brightness values respectively having a first gray scale from the at least one camera. The method may comprise, by using information associated with motion in a time section when the plurality of first images were captured, determining an image among the plurality of first images as a second image to generate map information. The method may comprise generating the map information using the second image. The method may comprise generating a file including metadata including the map information and the second image.

In an embodiment, a non-transitory computer readable medium storing instructions may be provided. The instructions that, when executed by at least one processor of an electronic device including at least one camera, may cause the electronic device to, in response to a shooting input, obtain a plurality of first images including brightness values respectively having a first gray scale from the at least one camera. The instructions that, when executed by the at least one processor, may cause the electronic device to, by using information associated with motion in a time section when the plurality of first images were captured, determine an image among the plurality of first images as a second image to generate map information. The instructions that, when executed by the at least one processor, may cause the electronic device to generate the map information using the second image. The instructions that, when executed by the at least one processor, may cause the electronic device to generate a file including metadata including the map information and the second image.

According to an embodiment, an electronic device may comprise a display, at least one processor comprising processing circuitry, and a memory storing instructions, comprising at least one storage medium. The instructions that, when executed by the at least one processor individually or collectively, may cause the electronic device to detect an event to display a first image having a first gray scale. The instructions that, when executed by the at least one processor individually or collectively, may cause the electronic device to, in response to the event, obtain map information, from metadata in a file including the first image, for a portion of the first image that is visually highlighted with respect to another portion of the first image. The instructions that, when executed by the at least one processor individually or collectively, may cause the electronic device to generate a second image by applying the map information to the first image. The instructions that, when executed by the at least one processor individually or collectively, may cause the electronic device to control the display to be operated in a second gray scale that is wider than the first gray scale to provide the second image in response to the event. The instructions that, when executed by the at least one processor individually or collectively, may cause the electronic device to control the display that is operated in the second gray scale to display the second image. The map information may be generated, based on motion in a time section when a plurality of third images were obtained, by using the first image determined among the plurality of third images having the first gray scale.

In an embodiment, a non-transitory computer readable medium storing instructions may be provided. The instructions that, when executed by an electronic device including a display, may cause the electronic device to detect an event to display a first image having a first gray scale. The instructions that, when executed by the electronic device, may cause the electronic device to, in response to the event, obtain map information, from metadata in a file including the first image, for a portion of the first image that is visually highlighted with respect to another portion of the first image. The instructions that, when executed by the electronic device, may cause the electronic device to generate a second image by applying the map information to the first image. The instructions that, when executed by the electronic device, may cause the electronic device to control the display to be operated in a second gray scale that is wider than the first gray scale to provide the second image in response to the event. The instructions that, when executed by the electronic device, may cause the electronic device to control the display that is operated in the second gray scale to display the second image. The map information may be generated, based on motion in a time section when a plurality of third images were obtained, by using the first image determined among the plurality of third images having the first gray scale.

### [Description of the Drawings]

FIG. 1 illustrates an exemplary operation of an electronic device that generates a file supporting an HDR effect and an SDR using a camera according to an embodiment.
FIG. 2 illustrates a block diagram of an electronic device according to an embodiment.
FIGS. 3A and 3B illustrate an exemplary operation of an electronic device that obtains a plurality of images obtained from at least one camera.
FIG. 4 illustrates an exemplary operation of an electronic device that generates a file using a plurality of images obtained from at least one camera.
FIG. 5 illustrates an exemplary structure of a file generated by an electronic device according to an embodiment.
FIG. 6 illustrates an exemplary brightness level of a display of an electronic device displaying an image included in a file.
FIG. 7 is a block diagram of an electronic device in a network environment according to various embodiments.
FIG. 8 is a block diagram illustrating a camera module according to various embodiments.
FIG. 9 is a block diagram of a display module according to various embodiments.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

An objective of the invention is to provide an electronic device generating metadata for enhancing brightness of a display displaying an image and a method thereof. A technical effect of the invention lies in enabling an electronic device to generate metadata for enhancing brightness of a display displaying an image.

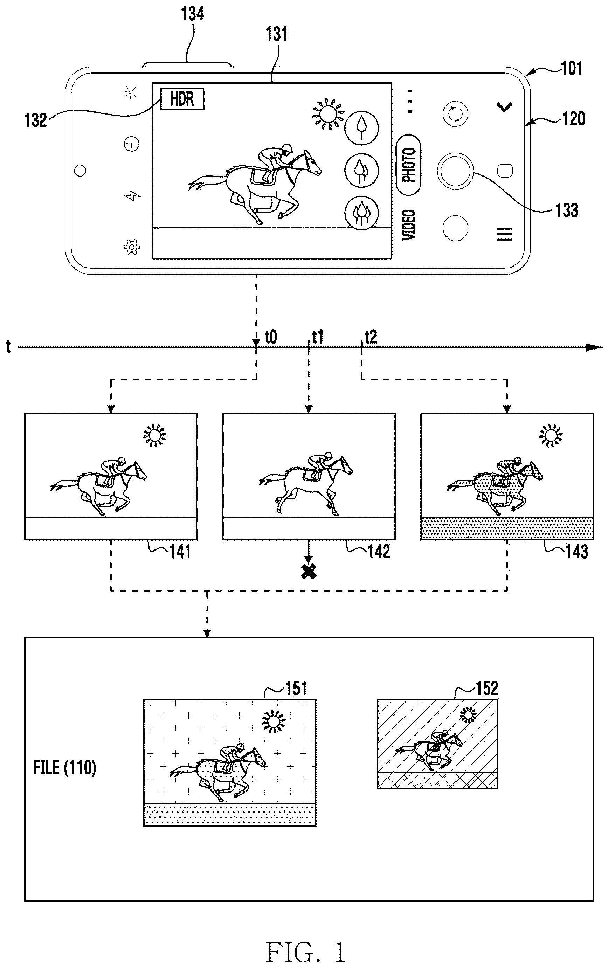

FIG. 1 illustrates an exemplary operation of an electronic device 101 that generates a file 110 supporting a high dynamic range (HDR) effect and a standard dynamic range (SDR) using a camera according to an embodiment. The electronic devices 101 may have a form factor of various forms, such as a smartphone, a laptop personal computer (PC), a tablet PC, a head-mounted display (HMD) device, a watch, and other similar computing devices (not illustrated). The electronic device 101 may be referred to as a mobile device, a user terminal, a user equipment (UE), a multifunctional device, a portable communication device, and/or a portable device. The form factor of the electronic device 101 is not limited to exemplary form factors illustrated in FIG. 1.

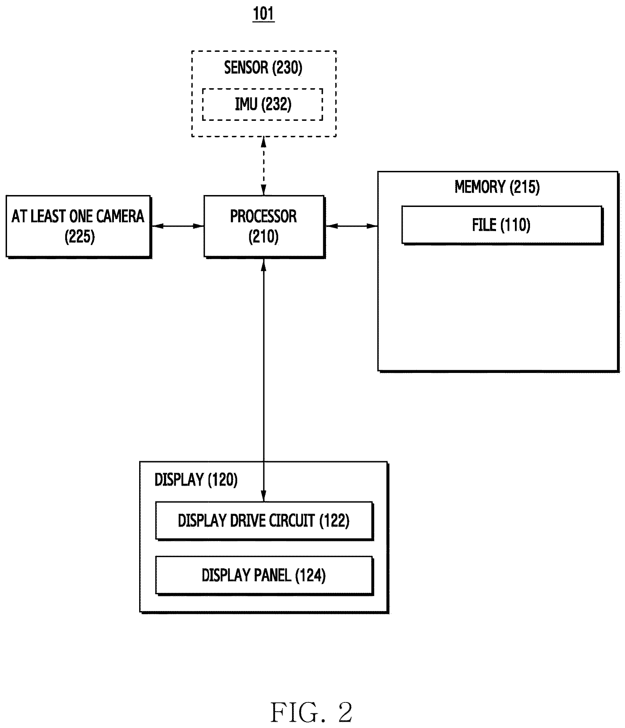

In an embodiment, the electronic device 101 may generate the file 110 and/or may visualize or display media content (e.g., media content referred to as a photo and/or an image) of the generated file 110. The file 110 may include a JPEG file, a high efficiency image file format (HEIF) file, a high efficiency image container (HEIC) file, a portable network graphic (PNG) file, and/or a graphics interchange format (GIF) file. An exemplary hardware configuration of the electronic device 101 for executing a function associated with generation and/or processing of the file 110 will be described with reference to FIG. 2.

In the present disclosure, luminance may mean intensity of light emitted from pixels of a display 120 (e.g., intensity of light measured in a unit of nit (or cd/m²)). In the present disclosure, a brightness value, a luma value, and/or a brightness level, which is a digital value assigned to a pixel of an image, may mean a relative value indicated according to a designated number of a bit depth referred to as a brightness level. For example, the brightness value may include a Y value in a YUV color space.

In the present disclosure, a dynamic range of an image may mean a scale of brightness of pixels of the image. Each pixels of an image having a standard dynamic range (SDR) may have a value of brightness levels of 256 (= 2⁸) steps, using a bit depth of 8-bit. For example, when displaying an image having an SDR, the electronic device 101 may control the display 120 by using a brightness value (or a luma value) of pixels of the image. For example, the electronic device 101 may control the display 120 such that each of pixels of the display 120 outputs a light of any one luminance among luminance corresponding to the brightness levels of 256 steps. The SDR may be, for example, a dynamic range of a standard RGB (sRGB) color space. When the image having the SDR is displayed, a ratio (hereinafter, a contrast ratio) between minimum luminance and maximum luminance of pixels of the display 120 may be approximately 250:1 (or approximately 256:1). The minimum luminance and the maximum luminance may have a difference of approximately 100 nit.

According to an embodiment, the electronic device 101 may perform an operation associated with a wider dynamic range (e.g., a high dynamic range (HDR)) than the SDR. For example, the electronic device 101 may change a contrast ratio of the display 120 to the contrast ratio (e.g., 1,000:1, 10,000:1, and/or 20,000:1) that is greater than the above-described 250:1, by controlling the display 120 that supports an HDR mode. Hereinafter, a gray scale of the display 120 may mean a scale of luminance in which pixels of the display 120 may emit light.

When the display 120 is controlled according to a gray scale of an HDR, as a contrast ratio of the display 120 increases, a difference in luminance between pixels in a dark portion and a bright portion of an image displayed through the display 120 may increase. In an embodiment, the electronic device 101 may generate or display the file 110 including an image 151 having a gray scale of the SDR, and metadata for controlling pixels of the display 120 corresponding to each of pixels of the image 151 in an extended gray scale of the HDR. For example, the metadata of the file 110 may include map information 152 indicating a degree to which luminance of each pixels of the display 120 controlled to display the image 151 increases or decreases in the gray scale of the HDR when the display 120 is controlled in the HDR. The map information 152, which is information used to increase luminance of pixels of a display controlled for displaying the image 151 of the file 110, may be referred to as a gain map. The map information 152 may include values for adjusting brightness values included in the image 151 such that a portion (e.g., a portion corresponding to the sky, and/or the sun) of the image 151 is visually emphasized on another portion (e.g., a portion corresponding to the ground) of the image 151 through a display (or a display device) displaying the file 110.

Referring to FIG. 1, a user interface (UI) displayed by the electronic device 101 for receiving an input associated with generation of the file 110 is exemplarily illustrated. The electronic device 101 may display a screen of FIG. 1 on the display 120, in a state of executing a software application (e.g., a camera application) for controlling at least one camera. The electronic device 101 may display, on the display 120, a preview image 131 based on at least a portion of an image obtained from at least one camera.

In an embodiment, the electronic device 101 may display, together with the preview image 131, visual objects mapped to each of a plurality of functions associated with at least one camera. For example, the electronic device 101 may display a visual object 132 indicating that an image supporting an HDR effect is capable of being captured or obtained. The visual object 132 may include a designated text such as "HDR". In a state that the visual object 132 is displayed, in response to an input (e.g., a touch input on a portion of the display 120 on which the visual object 132 is displayed) associated with the visual object 132, the electronic device 101 may cease displaying the visual object 132 on the display 120, or may display another visual object indicating that an image supporting a dynamic range different from the HDR is capable of being captured.

In an exemplary state of FIG. 1, the electronic device 101 may receive a shooting input. The shooting input may include an input for storing the file 110 associated with images (e.g., images included in an image stream) that are being continuously obtained through at least one camera. For example, the shooting input may be detected by a gesture (e.g., a tap gesture) with respect to a visual object 133 displayed on the display 120. The visual object 133 may be referred to as a shutter. The visual object 133 having a circular shape is exemplarily illustrated, but an embodiment is not limited thereto.

For example, the shooting input may be detected by a gesture of pressing a button 134 (e.g., the button 134 for adjusting a volume of the electronic device 101) exposed to the outside through a side (e.g., a lateral side connecting a front side and a rear side opposite to the front side) of the electronic device 101.

For example, the shooting input may be detected in response to a body part (e.g., a palm) detected by at least one camera, and/or a user's gesture associated with the body part while displaying the preview image 131. For example, in case that a palm having an unfolded posture is detected using an image obtained from at least one camera, the electronic device 101 may determine that a gesture indicating a shooting input is detected. The electronic device 101 may display an indicator (e.g., a visual object having a shape of a rectangular line) indicating a location where a palm is detected, in the preview image 131. In order to detect a palm from an image, the electronic device 101 may perform an algorithm for object recognition.

For example, the shooting input may be detected based on an audio signal obtained from a microphone of the electronic device 101. For example, in case of obtaining a natural language sentence (e.g., "Let's take a picture" and/or "Smile") indicating a shooting input from the audio signal, the electronic device 101 may determine that a voice command indicating the shooting input is detected. In order to recognize the natural language sentence, the electronic device 101 may process the audio signal obtained from the microphone by performing an algorithm such as a speech to text (STT) while displaying the preview image 131 of FIG. 1.

The electronic device 101 receiving a shooting input may generate or store the file 110 corresponding to the shooting input. In response to the shooting input, the electronic device 101 may obtain or receive images 141, 142 and 143 respectively having a first gray scale (e.g., a gray scale of the SDR) from at least one camera. The images 141, 142 and 143 may include brightness values having the first gray scale. The electronic device 101 may generate or obtain the image 151 having the gray scale corresponding to the SDR by synthesizing (e.g., bracketing) at least two images among the images 141, 142 and 143. For example, the image 151 may include brightness values indicated according to a bit depth of 8-bit. For example, each of the brightness values of the pixels of the image 151 may correspond to any one of 256 brightness levels. The image 151 may be referred to as an SDR image.

Referring to FIG. 1, the electronic device 101 may obtain a plurality of images 141, 142 and 143 from at least one camera, in response to a single shooting input. When capturing each of the plurality of images 141, 142, and 143, the at least one camera may be controlled by different attributes (or control information). For example, at least one of a shutter speed, an ISO sensitivity, and/or an exposure value of a camera at a time point t0 when a first image 141 is captured may be different from at least one of the shutter speed, the ISO sensitivity, and/or the exposure value of the camera at a time point t1 when a second image 142 is captured.

Referring to FIG. 1, in an embodiment in which the second image 142 is obtained using an exposure value increased from the exposure value used to obtain the first image 141, a portion (e.g., a portion corresponding to the sun, and/or the sky) of the second image 142 in which relatively strong light is detected may be saturated, and a portion (e.g., a portion corresponding to the ground, and/or a horse) in which relatively weak light is detected may not be saturated. Alternatively, in an embodiment in which the second image 142 is obtained using a shutter speed slower than the shutter speed used to obtain the first image 141, a portion in which relatively strong light is detected in the second image 142 may be saturated. The saturated portion in the second image 142 may be collectively filled with a brightness value (e.g., 255) indicating maximum brightness. For example, a portion (e.g., a portion corresponding to the sun, and/or the sky) of the second image 142 in which relatively strong light is detected may not include any information for reproducing a color of the portion.

Referring to FIG. 1, in an embodiment of obtaining a third image 143 using an exposure value smaller than all of exposure values used to obtain the first image 141 and the second image 142, a saturated portion of the third image 143 may be relatively smaller than a saturated portion of the first image 141 and the second image 142. Since the third image 143 is obtained by a camera controlled to receive relatively strong light, a portion (e.g., a portion corresponding to the ground and/or a horse) of the third image 143 in which relatively weak light is detected may be filled with a brightness value (e.g., 0) indicating minimum brightness. For example, a portion (e.g., a portion corresponding to the ground, and/or a horse) of the third image 143 in which relatively weak light is detected may not include any information for reproducing a color of the portion.

In an embodiment, the electronic device 101 may generate the file 110 capable of being processed in both the SDR and the HDR, by using at least one of a plurality of images (e.g., the images 141, 142 and 143) obtained in response to a shooting input. For example, the file 110 may include the image 151 capable of being displayed by another electronic device (or a display device) that supports only the SDR among the SDR or the HDR. For example, the electronic device 101 may include information (e.g., the map information 152) capable of scaling visual information of the image 151 to the HDR while including the image 151 of the SDR compatible with a legacy display device only supporting the SDR.

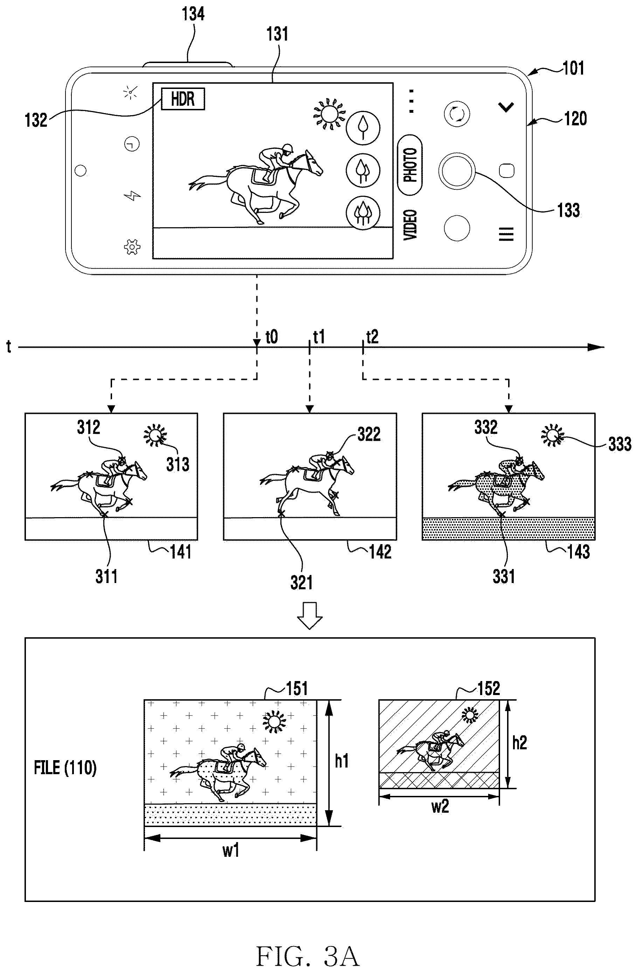

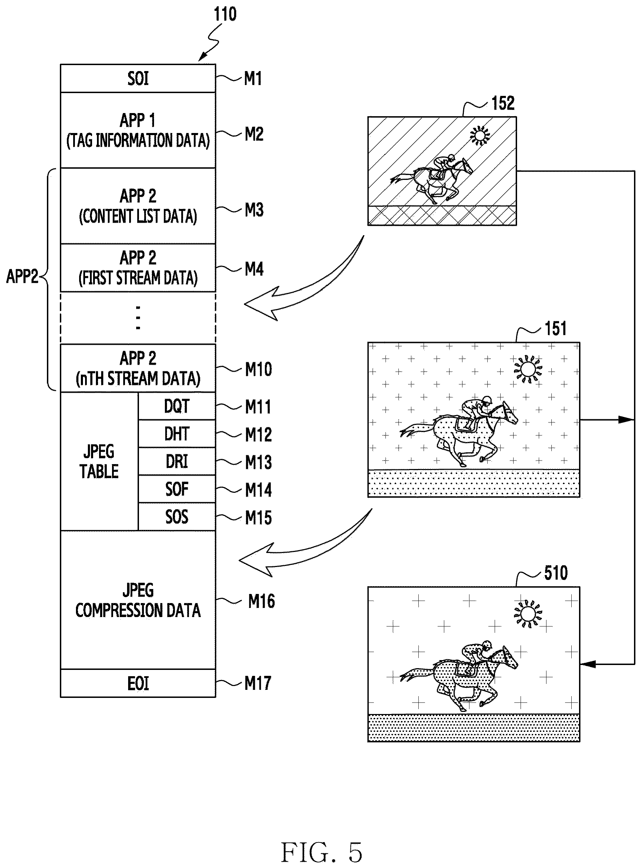

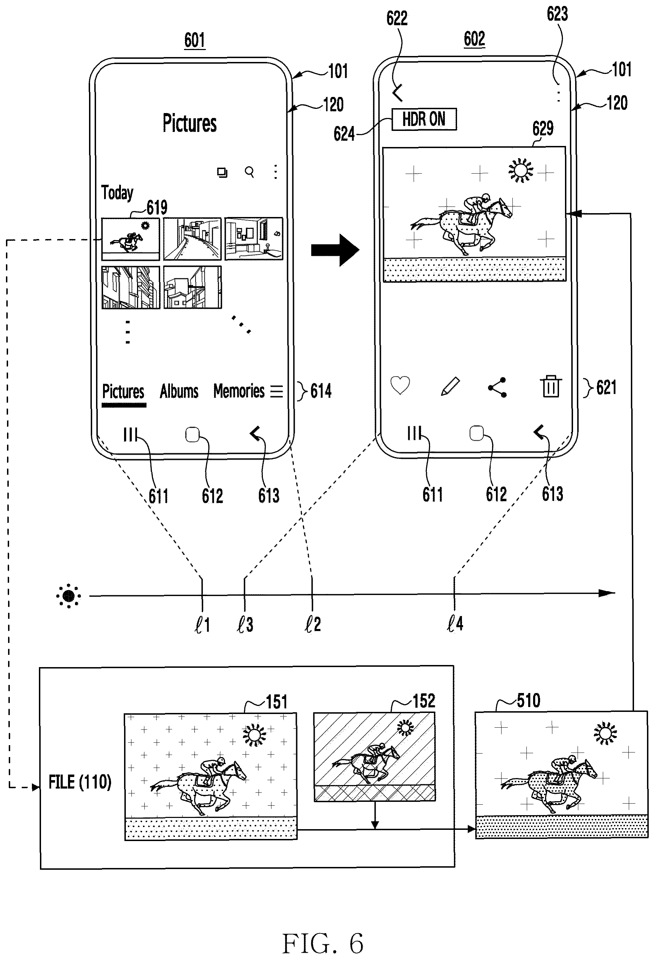

Referring to FIG. 1, according to motion (e.g., movement and/or rotation of a subject) of a subject, and/or motion (e.g., shaking and/or vibration of a hand holding the electronic device 101) of a camera at a time of shooting, and/or the electronic device 101 including the camera, a difference between the images 141, 142 and 143 obtained from the camera may increase. In an exemplary case of FIG. 1 of shooting a running horse, since a posture of the horse at time points t0, t1, and t2 of obtaining the images 141, 142, and 143 is different, distortion (e.g., a ghosting phenomenon) may occur according to consistency, when all of the images 141, 142, and 143 are synthesized. According to an embodiment, the electronic device 101 may generate or store the file 110, by selectively synthesizing a portion among the images 141, 142 and 143 to prevent or reduce the distortion. The electronic device 101 may determine or select at least one image to be used to generate the file 110 among the images 141, 142 and 143, by using information associated with motion (e.g., motion of the electronic device 101, and/or a subject) that causes a difference between the images 141, 142, and 143. In case that only one image is determined, the electronic device 101 may generate the file 110 including the map information 152 generated from the determined image. An exemplary operation in which the electronic device 101 determines whether to use each of the images 141, 142 and 143 obtained based on a shooting input for generating the file 110 will be described with reference to FIG. 3A to FIG. 4. An exemplary structure of the file 110 generated by the electronic device 101 will be described with reference to FIG. 5. An exemplary operation of the electronic device 101 controlling the display 120 supporting the HDR in response to an input associated with the file 110 will be described with reference to FIG. 6.

Hereinafter, an exemplary operation of the electronic device 101 generating the file 110 in an exemplary situation of shooting a running horse will be described, but an embodiment is not limited thereto. For example, in a state of shooting a static subject, the electronic device 101 may generate the file 110 using at least one of the images 141, 142 and 143, in order to prevent or reduce distortion caused by vibration of a hand holding the electronic device 101. For example, the electronic device 101 may generate the file 110 using at least one of the images 141, 142, and 143, in order to reduce distortion due to movement of a subject and/or movement of the electronic device 101 (e.g., movement of the electronic device 101 by vibration of the hand holding the electronic device 101) while obtaining the images 141, 142, and 143.

Hereinafter, an exemplary hardware configuration of the electronic device 101 of FIG. 1 will be described with reference to FIG. 2.

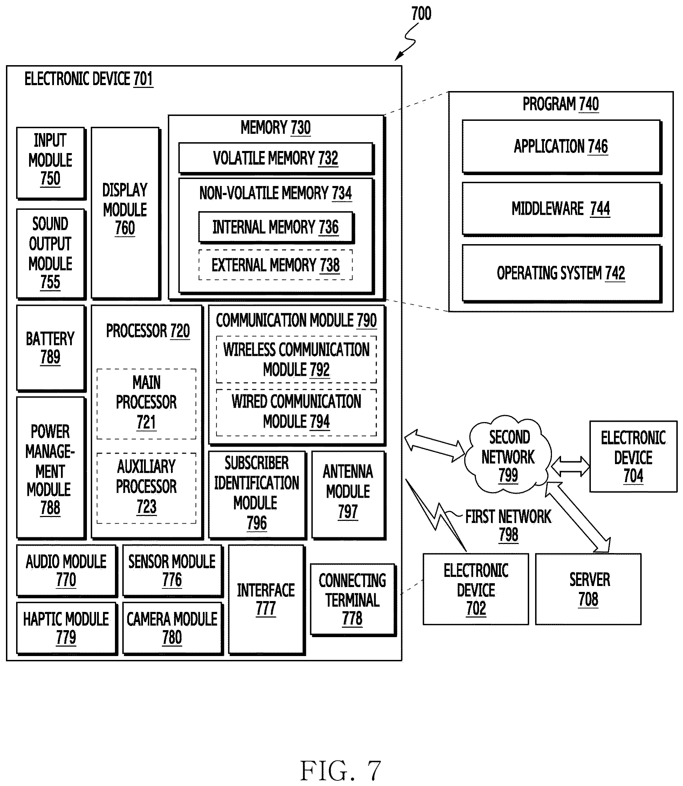

FIG. 2 illustrates a block diagram of an electronic device 101 according to an embodiment. The electronic device 101 of FIG. 2 may include the electronic device 101 of FIG. 1. Referring to FIG. 2, the electronic device 101 may include a processor 210 (e.g., a processor 720 of FIG. 7) and a display 120, a memory 215, at least one camera 225, and a sensor 230. A hardware configuration of the electronic device 101 is not limited to an embodiment of FIG. 2. For example, the electronic device 101 may further include an electronic component described with reference to FIG. 7. For example, a portion (e.g., the sensor 230) of electronic components of FIG. 2 may be excluded from the electronic device 101.

For example, the processor 210 may be operatively (or operably) coupled with the display 120 or display driving circuitry 122 in the display 120. For example, the processor 210 being operatively coupled with the display 120 (or the display driving circuitry 122) may indicate that the processor 210 is directly connected to the display 120 (or the display driving circuitry 122). For example, the processor 210 being operatively coupled with the display 120 (or the display driving circuitry 122) may indicate that the processor 210 is connected to the display 120 (or the display driving circuitry 122) through another component of the electronic device 101. For example, the processor 210 being operatively coupled with the display 120 (or the display driving circuitry 122) may indicate that a state of the processor 210 is a state capable of controlling the display 120 (or the display driving circuitry 122). For example, the processor 210 being operatively coupled with the display 120 (or the display driving circuitry 122) may indicate that an operation of the display 120 (or the display driving circuitry 122) is caused based on information, data, a signal, or a command obtained from the processor 210. However, it is not limited thereto.

For example, the processor 210 of the electronic device 101 may include a circuit (e.g., processing circuitry) for processing data based on one or more instructions. The circuit for processing data may include, for example, an arithmetic and logic unit (ALU), a floating point unit (FPU), a field programmable gate array (FPGA), a central processing unit (CPU), a graphic processing unit (GPU), a neural processing unit (NPU), and/or an application processor (AP). For example, the number of processors may be one or more. Processing circuitry of a processor that loads (or fetches) an instruction and performs a calculation corresponding to the loaded instruction may be referred to or may be referenced as a core circuit (or a core). For example, the processor may have a structure of a multi-core processor that includes a plurality of core circuits, such as a dual core, a quad core, a hexa core, or an octa core. A function and/or an operation described with reference to the present disclosure may be performed individually or collectively by one or more processing circuitry included in the processor 210.

For example, the display 120 of the electronic device 101 may output visualized information (e.g., the screen of FIG. 1) to a user. For example, the display 120 may output visualized information to a user, by being controlled by a controller such as a graphic processing unit (GPU). The display 120 may include a liquid crystal display (LCD), a plasma display panel (PDP), and/or one or more light emitting diodes (LEDs). The LED may include an organic LED (OLED). The display 120 may include a flat panel display (FPD) and/or electronic paper. An embodiment is not limited thereto, and the display 120 may have at least a partially curved shape or having a deformable shape. The display 120 having the deformable shape may be referred to as a flexible display.

For example, the display 120 of the electronic device 101 may include a sensor (e.g., a touch sensor panel (TSP)) for detecting an external object (e.g., a finger of a user) on the display 120. For example, based on the TSP, the processor 210 may detect an external object contacting with the display 120 or floating on the display 120. In response to detecting the external object, the processor 210 may execute a function associated with a specific visual object corresponding to a location of the external object on the display 120 among visual objects displayed on the display 120.

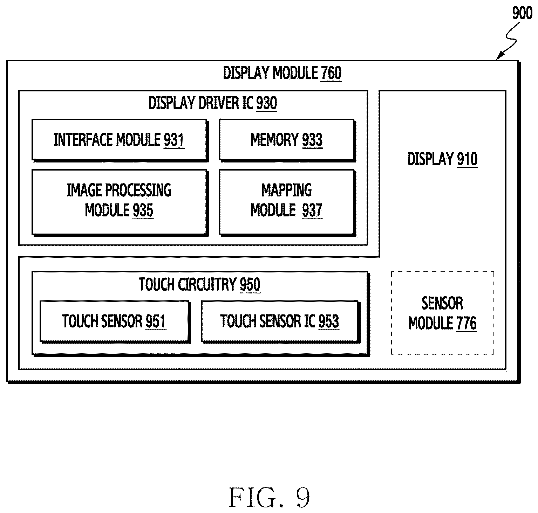

For example, the display 120 may include the display driving circuitry 122 (e.g., a display driver IC 930 of FIG. 9) and a display panel 124 (e.g., a display 910 of FIG. 9). For example, the display driving circuitry 122 may be operatively coupled with the display panel 124. For example, in case that the display panel 124 includes a plurality of LEDs arranged in a two-dimensional matrix form, the display driving circuitry 122 may be configured to control at least one LED included in a corresponding row or column among the plurality of LEDs. Controlling at least one LED by the display driving circuitry 122 may include an operation of adjusting luminance (or a light amount, and/or light intensity) of the LEDs. In the present disclosure, luminance may mean intensity of light emitted from pixels of the display 120 (e.g., intensity of light measured in a unit of nit (or cd/m²)). In the present disclosure, brightness, which is brightness of a pixel of an image to be displayed through the display 120, may include a relative value indicated in bits of a bit depth referred to as a brightness level.

For example, the memory 215 of the electronic device 101 may include a circuit and/or a storage medium for storing data and/or an instruction inputted and/or outputted to the processor 210. The memory may include, for example, a volatile memory such as a random-access memory (RAM) and/or a non-volatile memory such as a read-only memory (ROM). The non-volatile memory may be referred to as storage. The volatile memory may include, for example, at least one of a dynamic RAM (DRAM), a static RAM (SRAM), a Cache RAM, and a pseudo SRAM (PSRAM). The nonvolatile memory may include, for example, at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC). The processor 210 of the electronic device 101 may perform a function and/or an operation indicated by instructions, by executing the instructions of the memory 215 in the electronic device 101. For example, when the electronic device 101 includes at least one processor, the at least one processor may be configured to execute the instructions collectively or individually.

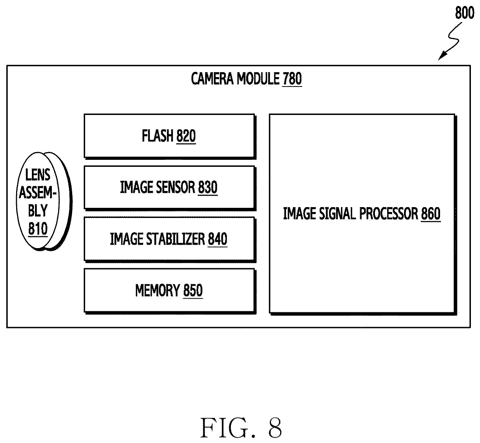

For example, the at least one camera 225 of the electronic device 101 may include optical sensors (e.g., a charged coupled device (CCD) sensor and a complementary metal oxide semiconductor (CMOS) sensor) that generate an electrical signal indicating a color and/or brightness of light. A plurality of optical sensors included in the at least one camera 225 may be disposed in a form of a 2 dimensional array. The at least one camera 225 may generate 2 dimensional frame data corresponding to light reaching the optical sensors of the 2 dimensional array, by substantially simultaneously obtaining an electrical signal of each of the plurality of optical sensors. For example, photo data captured using the at least one camera 225 may mean a 2 dimensional frame data obtained from the at least one camera 225. For example, video data captured using the at least one camera 225 may mean a sequence of a plurality of 2 the dimensional frame data obtained from the at least one camera 225. The at least one camera 225 of FIG. 2 may include a camera module 780 of FIG. 7 and/or FIG. 8.

For example, the sensor 230 of the electronic device 101 may generate electronic information capable of being processed by the processor 210 and/or the memory 215 from non-electronic information associated with the electronic device 101. The electronic information generated by the sensor 230 may be stored in the memory 215, processed by the processor 210, and/or transmitted to another electronic device distinct from the electronic device 101. For example, the sensor 230 may include an inertial measurement unit (IMU) 232 for measuring physical motion of the electronic device 101. The IMU 232 may include an acceleration sensor, a gyro sensor, a geomagnetic sensor, or a combination thereof. For example, the processor 210 may receive, from the IMU 232, an electrical signal indicating gravitational acceleration and/or acceleration of each of a plurality of axes (e.g., an x-axis, a y-axis, and a z-axis) perpendicular to each other and based on a designated origin (e.g., a designated origin in the IMU 232). For example, the processor 210 may receive, from the IMU 232, an electrical signal indicating an angular velocity of each of the plurality of axes. For example, the processor 210 may receive, from the IMU 232, an electrical signal indicating a size of a magnetic field formed in the electronic device 101 along each of the plurality of axes (e.g., the x-axis, the y-axis, and/or the z-axis).

The IMU 232 included in the sensor 230 is exemplarily described, but an embodiment is not limited thereto. For example, the sensor 230 may further include a sensor (e.g., a global positioning system (GPS) sensor, a proximity sensor, a grip sensor, a temperature sensor, a heart rate sensor, and/or a time-of-flight (ToF) sensor) not illustrated in FIG. 2.

Referring to FIG. 2, a file 110 may be stored in the memory 215 of the electronic device 101. The electronic device 101 may generate the file 110 or may store the file 110 in the memory 215, by executing a software application (e.g., a camera application) associated with the at least one camera 225. The electronic device 101 may display, on the display 120, an image based on the file 110 by executing a software application (e.g., a gallery application) for visualizing the file 110. The file 110 may include color information indicating a color of pixels of an image (e.g., the image 151 of FIG. 1) according to a color space such as YUV, RGB, and/or HSV. For example, the file 110 based on a color space of RGB may indicate a color of a specific pixel, by using intensity of three primary colors of red, green, and blue. For example, the file 110 based on a color space of YUV may indicate a color of a specific pixel, by using three components including a brightness component (e.g., a Y component) and color difference components (e.g., a Cb component and/or a Cr component).

For example, at least three channels may be used to indicate a color of pixels in an image. When generating the file 110 in a JPEG format using images obtained from the at least one camera 225, the processor 210 may indicate colors of pixels indicated by the file 110 using three channels (or components) having a bit depth of 8-bits. The file 110 may additionally include map information (e.g., the map information 152 of FIG. 1) corresponding to a specific component (e.g., a brightness component). For example, the map information corresponding to a brightness component (or a brightness channel) may be used to change (e.g., increase or decrease in luminance based on the HDR) luminance of pixels controlled by a gray scale of the brightness component and/or the brightness component.

According to an embodiment, the processor 210 of the electronic device 101 may obtain or receive a plurality of images (e.g., the images 141, 142 and 143 of FIG. 1) from the at least one camera 225 in response to a shooting input. Within a time section when the images were captured, the processor 210 may obtain information associated with motion of the electronic device 101 and/or at least one subject included in the images. The processor 210 may determine a portion of the plurality of images as an image for generating at least a portion (e.g., map information included in the file 110) of the file 110, by using information associated with motion within the time section. The processor 210 may generate or obtain an image (e.g., the image 151 of FIG. 1) including brightness values having a gray scale of the SDR to be included in the file 110, by using at least a portion of the plurality of images. The image may include information (e.g., brightness values having a bit depth of 8-bit) readable by a display device (e.g., a legacy display device) that supports only the SDR among the SDR or the HDR. In the present disclosure, the term "time section" may be used interchangeably with a term "time period".

The processor 210 may generate or obtain the map information using a portion of a plurality of images determined to generate map information of the file 110, such that an image having a gray scale of an SDR in the file 110 is seen as an image having brightness values in a gray scale greater (or wider) than the gray scale of the SDR though a display device (e.g., a display supporting an HDR mode, such as the display 120 of FIG. 1). The processor 210 may generate the file 110 including the map information and an image having the gray scale of the SDR.

When the processor 210 generates the file 110 using a portion of a plurality of images, the processor 210 may remove a remaining of the plurality of images different from the portion of the plurality of images. For example, a plurality of images may be at least temporarily stored in the memory 215 (e.g., a volatile memory). The processor 210 may remove, from a memory, a remaining portion of the plurality of images, except for a portion determined to generate the file 110 and/or metadata (e.g., the map information 152) in the file 110. For example, the remaining portion removed from the memory may not be used in any operation associated with generating the file 110.

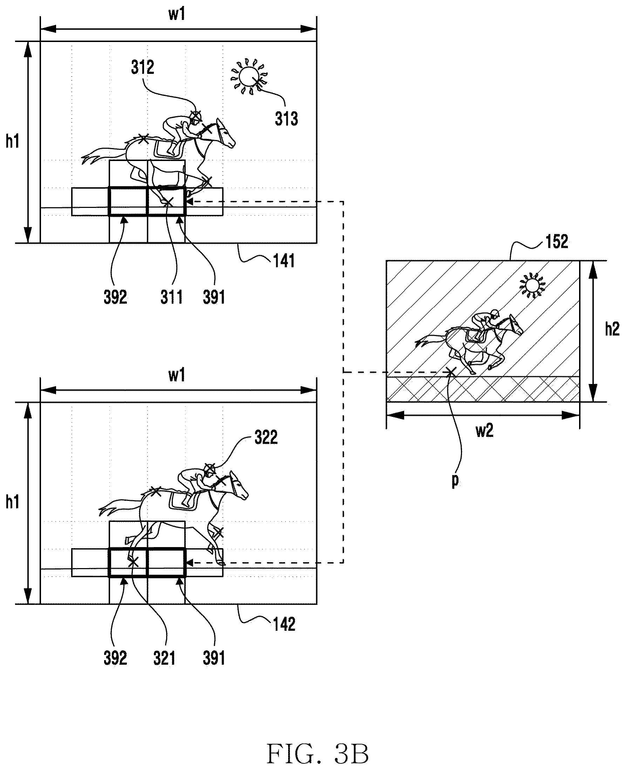

Hereinafter, an exemplary operation of the electronic device 101 that generates the file 110 using images obtained from at least one camera 225 will be described with reference to FIG. 3A and/or FIG. 3B.

FIGS. 3A and 3B illustrate an exemplary operation of an electronic device 101 that obtains a plurality of images 141, 142 and 143 obtained from at least one camera (e.g., the at least one camera 225 of FIG. 2). The electronic device 101 of FIG. 1 to FIG.2 and/or the processor 210 of FIG. 2 may perform an operation of the electronic device 101 described with reference to FIG. 3A to FIG. 3B.

Referring to FIG. 3A, an exemplary state in which a plurality of images 141, 142 and 143 are obtained from at least one camera in response to a shooting input is illustrated. The electronic device 101 executing a software application associated with at least one camera may execute a plurality of threads associated with the plurality of images 141, 142 and 143, in order to quickly perform an operation of generating a file 110 from the plurality of images 141, 142, and 143. A thread, which is a unit in which a processor (e.g., the processor 210 of FIG. 2) executes a task and/or instructions, may be a unit that distributes resources (e.g., a time, and/or an occupancy state of processing circuitry) of the processor.

In an embodiment, the processor may substantially simultaneously execute functions of each of a plurality of threads, by executing the plurality of threads. A plurality of threads executed in response to a shooting input may include a first thread (e.g., a generation thread) for generating map information 152 from at least one of the plurality of images 141, 142 and 143, and a second thread (e.g., a determination thread) for determining a portion of the plurality of images 141, 142 and 143 to be used to generate the map information 152.

In an embodiment, the electronic device 101 that obtains a plurality of images 141, 142 and 143 may generate the map information 152 in response to the plurality of images 141, 142 and 143 obtained from at least one camera. The map information 152 may be a two-dimensional array including degrees of enhancing brightness of different portions of a reference image (e.g., any one of an image 151 to be stored in the file 110 and/or the plurality of images 141, 142, and 143). A width w2 and a height h2 of the two-dimensional array may be smaller than or equal to a width w1 and a height h1 of the reference image (e.g., the image 151). In an embodiment, the electronic device 101 may determine, among the plurality of images 141, 142, and 143, a first image 141 having an attribute (e.g., an exposure value, a shutter speed, and/or an ISO sensitivity) associated with a shooting input as the image 151 to be stored in the file 110. The electronic device 101 may generate or obtain the map information 152 for the determined image 151.

For example, the electronic device 101 may generate the map information 152 by using a difference in brightness values of the first image 141 and other images (e.g., a second image 142, and/or a third image 143). In the example, the electronic device 101 may apply a designated weight to brightness values of the other image. The electronic device 101 may generate the map information 152, by using difference values between the brightness values to which the designated weight is applied and brightness values of the first image 141. The map information 152 may include 0, and/or positive difference values among the difference values. In case that a brightness value of another image is greater than a brightness value of the first image 141, a positive difference value may be stored in the map information 152. For example, the map information 152 may include information on a brightness scale brighter than a brightness scale represented by the first image 141.

When generating the map information 152 using all of the plurality of images 141, 142, and 143, the processor may obtain information indicating motion associated with the plurality of images 141, 142, and 143, by executing the second thread different from the first thread generating the map information 152 from the plurality of images 141, 142, and 143. By using the information, the electronic device 101 may select or determine at least one image to be used for generating the map information 152 from among a plurality of images. For example, among the plurality of images with different attributes (e.g., an exposure value, an ISO sensitivity, and/or a shutter speed), the electronic device 101 may determine a portion to be used to generate the map information 152.

For example, the electronic device 101 may calculate or identify motion (e.g., a subject captured by a camera, and/or motion of the electronic device 101) generated when shooting another image and a change in content caused by the motion, by comparing a reference image (e.g., the first image 141) and the other image among a plurality of images. Referring to FIG. 3A, the electronic device 101 that obtains the plurality of images 141, 142 and 143 may obtain or extract feature points (or key points) of each of the plurality of images 141, 142, and 143, by executing the second thread. A feature point of a specific image may mean a portion and/or a pixel uniquely included in the specific image used to distinguish the specific image from another image. The electronic device 101 may detect feature points from the plurality of images 141, 142 and 143, by performing an algorithm such as Harris corner detection, Shi & Tomasi detection, a feature from accelerated segment test (FAST), scale-invariant feature transform (SIFT), speeded up robust features (SURF), binary robust independent elementary features (BRIEF), and/or oriented and rotated BRIEF (ORB).

Referring to FIG. 3A, the electronic device 101 may determine feature points included in images 141, 142 and 143 as information associated with motion. Locations indicated by 'x' in each of the images 141, 142 and 143 may correspond to feature points. For example, in the image 141, a feature point 311 associated with a horse's right back leg, a feature point 312 associated with a rider's head, and a feature point 313 associated with the sun may be extracted. In the image 142, a feature points 321 associated with the horse' right back leg and a feature point 322 associated with the rider's head may be extracted. Since a portion of the image 142 associated with the sky and/or the sun is saturated, a feature point associated with the sun may not be extracted from the image 142. In the image 143, the feature point 331 associated with a horse's right back leg, the feature point 332 associated with a rider's head, and the feature point 333 associated with the sun may be extracted.

Locations of the feature points determined in each of the images 141, 142 and 143 may be moved according to a subject at each of time points t0, t1, and t2 capturing the images 141, 142, and 143 and/or motion of the electronic device 101. For example, as a posture of a horse changes at each of the time points t0, t1, and t2 when the images 141, 142, and 143 were captured, feature points 311, 321, and 331 associated with a horse's right back leg may have different locations in each of the first image 141 to the third image 143. Locations of the feature points 311, 321, and 331 may be moved according to motion of the electronic device 101 within a time section including the time points t0, t1, and t2. According to an embodiment, the electronic device 101 may determine at least one image to be used to generate the map information 152 among the images 141, 142, and 143, by comparing locations of feature points (e.g., the feature points 311, 321, and 331) in the images 141, 142, and 143.

Referring to FIG. 3B, an exemplary operation of the electronic device 101 comparing locations of feature points of the first image 141 and the second image 142 is illustrated. In an embodiment in which the electronic device 101 generates the map information 152 having a width w2 and a height h2 that are smaller than a width w1 and a height h1 of images 141 and 142, pixels of the map information 152 may correspond to different portions of the images 141 and 142. In an embodiment in which the first image 141 is determined as a reference image, an area 391 of the first image 141 including the feature point 311 may correspond to a pixel p of the map information 152. A size of the area 391 may be a ratio between a size (e.g., the width w2 and/or the height h2) of the map information 152, and a size (e.g., the width w1 and/or the height h1) of the first image 141. For example, a width of the area 391 may be w1/w2, and a height of the area 391 may be h1/h2. As a size of the map information 152 is smaller, the size of the area 391 may be larger.

In an embodiment, the electronic device 101 may calculate or may determine distances between locations of feature points 311 and 321 in each of the first image 141 and the second image 142. Based on whether at least one of the distances is greater than a ratio of sizes of the first image 141 and the map information 152, the electronic device 101 may determine another image (e.g., the second image 142) different from the first image 141, which is a reference image, as an image to be used for generating the map information 152. For example, in case that all of the distances are less than or equal to the ratio, the electronic device 101 may determine the other image as an image to be used for generating the map information 152. For example, in case that at least one of the distances is greater than the ratio, the electronic device 101 may not use the other image to generate the map information 152, and/or discard the other image.

For example, since a size (e.g., the width w1/w2, and/or the height h1/h2) of the area 391 is determined by a ratio of sizes of the first image 141 and the map information 152, a distance between locations of the feature points 311 and 321 being greater than the ratio may mean that the feature points 311 and 321 correspond to different pixels of the map information 152. Referring to FIG. 3B, a case is illustrated in which the feature point 311 is extracted from the area 391 of the first image 141 corresponding to the pixel p of the map information 152, and the feature point 321 in the second image 142 matched to the feature point 311 is extracted from another area 392 different from the area 391 of the second image 142. In the case, the area 392 may be matched to a pixel different from the pixel p of the map information 152. Since the feature points 311 and 321 are matched to a same subject (e.g., a horse's right back leg), all of pixels of the map information 152 corresponding to areas 391 and 392 may include information associated with the subject, in case that the map information 152 is generated using all of the first image 141 and the second image 142. The information included in all of pixels of the map information 152 may cause distortion (e.g., a ghosting phenomenon) according to motion of a subject. In order to prevent the distortion, the electronic device 101 may discard the second image 142 including the feature point 321 spaced apart from the feature point 311 by being greater than the ratio. For example, the second image 142 may be determined not to be used for generating the map information 152.

Referring again to FIG. 3A, in an embodiment in which the electronic device 101 obtains three images 141, 142, and 143 in response to a shooting input, the electronic device 101 may calculate distances between feature points (e.g., feature points 311, 312, and 313) of the first image 141, which is a reference image, and feature points (e.g., feature points 321, 322, 331, 332, and 333) of other images (e.g., the second image 143, and/or the third image 143). The electronic device 101 may calculate or may determine distances between feature points determined to be associated with a same subject and/or matched with each other. In case that a distance between a feature point (e.g., the feature point 311) of a reference image and a feature point (e.g., the feature point 321) of a specific image (e.g., the second image 142) is greater than a designated distance (e.g., a distance corresponding to a ratio between sizes of the map information 152 and the first image 151) capable of causing distortion in the map information 152, the electronic device 101 may remove the specific image from the memory. For example, the specific image may be determined not to be used to generate the map information 152, and/or the file 110.

An exemplary operation of determining at least one image to be used to generate the map information 152 among the images 141, 142, and 143 using distances between feature points is described, but an embodiment is not limited thereto. The electronic device 101 may determine at least one image to be used to generate the map information 152 based on motion (e.g., a movement distance, movement speed, a rotation angle, and/or angular speed) of the electronic device 101 measured by a sensor (e.g., the IMU 232 of FIG. 2) of the electronic device 101 and/or optical image stabilization (OIS) of a camera within a time section (e.g., a time section between time points t0 and t2) in which the images 141, 142 and 143 were obtained. For example, the number of images to be used to generate the map information 152 among the images 141, 142, and 143 obtained from a camera may be changed according to a size of motion indicated by information associated with the motion. As a distance between feature points increases or a size of motion increases, the number of images to be used to generate the map information 152 may decrease.

Since a feature point is mainly extracted from an edge (e.g., a vertex) represented by pixels in an image, the number of feature points in the image may be associated with complexity of the image. For example, as the number of feature points of the images 141, 142 and 143 is smaller, the images 141, 142 and 143 may include simple content. As complexity of an image decreases, a possibility of distortion occurring in the map information 152 corresponding to the image may decrease. In an embodiment, in case that the number of feature points of each of the images 141, 142 and 143 is less than a designated threshold, the electronic device 101 may generate the map information 152 by using all of the images 141, 142 and 143 without comparing locations of the feature points of the images 141, 142, and 143.

In an embodiment, as a resolution and/or a size of the map information 152 is smaller, a size of the areas 391 and 392 may increase. The electronic device 101 may reduce distortion of the map information 152 due to movement of a subject and/or the electronic device 101 by reducing the resolution and/or the size of the map information 152. In an embodiment of FIG. 3B, the electronic device 101 identifying the feature points 311 and 321 having a distance greater than a ratio of sizes of the first image 141 and the map information 152 may cause all of the feature points 311 and 321 to be matched to a specific pixel of the map information 152 having a reduced size, by reducing the size of the map information 152. In this case, distortion of the map information 152 due to motion of a subject corresponding to the feature points 311 and 321 may not occur. In an embodiment, the electronic device 101 may reduce the size of the map information 152 while the size of the map information 152 is greater than a designated size.

As described above, in case of obtaining the plurality of images 141, 142 and 143 based on a shooting input, the electronic device 101 may determine whether to use each of the images 141, 142 and 143 for generating the map information 152. According to motion (e.g., shaking of the electronic device 101) of a subject and/or the electronic device 101, the number of images to be used to generate the map information 152 may be reduced. According to an embodiment, in case that the number of images to be used to generate the map information 152 is reduced to be less than or equal to a designated number, the electronic device 101 may additionally obtain at least one image (e.g., an image including brightness values having a gray scale of the SDR) to be used to generate the map information 152 by controlling at least one camera (e.g., the at least one camera 225 of FIG. 2). When additionally obtaining the at least one image, the electronic device 101 may change at least one of camera attributes (e.g., a shutter speed, an ISO sensitivity, and/or an exposure value) set to obtain the images 141, 142, and 143. The electronic device 101 may additionally obtain at least one image, by controlling the camera having the changed at least one attribute. The additionally obtained at least one image may be used to generate the map information 152 together with the image reduced to be less than or equal to a designated number. The additionally obtained at least one image may be obtained from a ring buffer formed in a memory (e.g., the memory 215 of FIG. 2) of the electronic device 101. The ring buffer may be formed in a memory for at least temporarily storing images (e.g., image frames) continuously obtained from at least one camera.

As described above, in case that the electronic device 101 executes a plurality of threads, the electronic device 101 may substantially simultaneously execute a first thread for generating the map information 152 from the images 141, 142 and 143, and a second thread for determining a portion of the images 141, 142 and 143 to be used to generate the map information 152. For example, in case of generating the map information 152 based on execution of the first thread, the electronic device 101 may use the second thread to determine whether to store the map information 152 generated based on the first thread in the file 110. In case of using a portion (e.g., one first image 141) among the images 141, 142 and 143 for generating the map information 152 based on execution of the second thread, the electronic device 101 may generate the map information 152 using the portion, instead of generating the map information 152 from the images 141, 142 and 143 using the first thread (e.g., ceasing generating the map information 152 from the images 141, 142 and 143 using the first thread). For example, when generating the map information 152 using only one of the images 141, 142, and 143, the electronic device 101 may determine an amount of increase in luminance indicated by the map information 152 within a scale less than a designated threshold. The designated threshold may be empirically determined according to a scale of increase in luminance capable of being estimated in a single image.

As described above, according to an embodiment, the electronic device 101 may generate the file 110 that includes metadata including the map information 152 and the image 151 generated by using at least a portion of the images 141, 142 and 143, and having the gray scale of the SDR. The map information 152, which is information used to increase luminance of pixels of a display controlled for displaying the image 151 of the file 110, may be referred to as a gain map. The map information 152 may include values for adjusting brightness values included in the image 151 such that a portion (e.g., a portion corresponding to the sky, and/or the sun) of the image 151 is visually emphasized on another portion (e.g., a portion corresponding to the ground) of the image 151 through a display (or a display device) displaying the file 110.

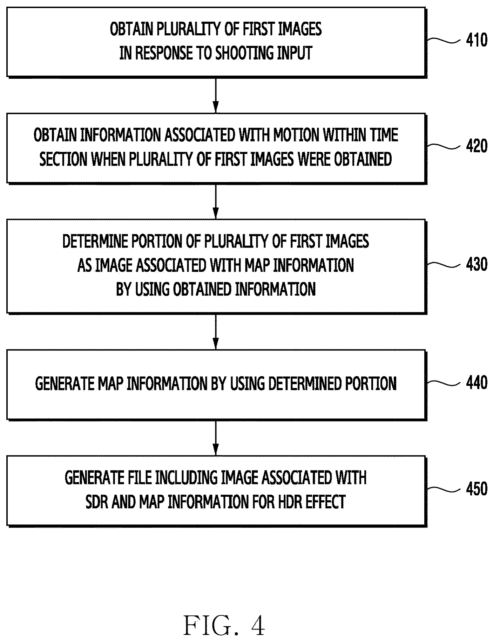

Hereinafter, an exemplary operation of an electronic device for generating the file 110 will be described with reference to FIG. 4.

FIG. 4 illustrates an exemplary operation of an electronic device that generates a file using a plurality of images (e.g., the plurality of images 141, 142 and 143 of FIG. 1) obtained from at least one camera (e.g., the at least one camera 225 of FIG. 2). The electronic device 101 of FIG. 1 to FIG. 2 and/or the processor 210 of FIG. 2 may perform an operation of the electronic device 101 described with reference to FIG. 4.

Referring to FIG. 4, in an operation 410, a processor of the electronic device according to an embodiment may obtain a plurality of first images in response to a shooting input. The shooting input in the operation 410 may include the shooting input described above with reference to FIG. 1. In response to the shooting input, the processor may obtain the plurality of first images of the operation 410, by controlling at least one camera (e.g., the at least one camera 225 of FIG. 2). In order to obtain first images having different attributes, the processor may change an attribute (e.g., an ISO sensitivity, a shutter speed, and/or an exposure value) of the at least one camera based on obtaining each of the first images. The first images of the operation 410 may have different attributes, such as the plurality of images 141, 142 and 143 of FIG. 1, and may be captured or obtained by at least one camera at different time points.

Referring to FIG. 4, in an operation 420, the processor of the electronic device according to an embodiment may obtain information associated with motion within a time section when the plurality of first images were obtained. For example, the information of the operation 420 may include feature points (or a distance and/or a difference between locations of feature points) included in each of the plurality of first images. For example, the information of the operation 420 may include a difference (e.g., a distance) between locations of feature points matched to each other in different images. The information of the operation 420 may be associated with motion of the electronic device 101 detected by a sensor (e.g., the IMU 232 of FIG. 2) of the electronic device 101 within the time section. For example, the information of the operation 420 may include data for confirming shaking (e.g., vibration generated from a hand holding the electronic device) of the electronic device and/or movement of a subject, which occurred while obtaining a plurality of first images.

Referring to FIG. 4, in an operation 430, the processor of the electronic device according to an embodiment may determine a portion of the plurality of first images as an image associated with map information (e.g., the map information 152 of FIG. 1), by using the obtained information. For example, the processor may determine whether to use each of the first images of the operation 410 for generating map information, by performing the operation described with reference to FIG. 3A and/or FIG. 3B. An image including content different from another image may be excluded or removed, by motion of a subject and/or the electronic device.

Referring to FIG. 4, in an operation 440, the processor of the electronic device according to an embodiment may generate map information (e.g., the map information 152 of FIG. 1), by using the determined portion of the operation 430. For example, in case that two or more images are determined as an image associated with the map information based on the operation 430, the processor may generate or obtain map information by synthesizing the two or more images obtained using different exposure values. For example, in case that only one image is determined as an image associated with the map information based on the operation 430, the processor may obtain or generate the map information of the operation 440 by performing an algorithm for generating map information from a single image.

Referring to FIG. 4, in an operation 450, the processor of the electronic device according to an embodiment may generate a file including an image associated with an SDR and map information for an HDR effect. The image associated with the SDR of the operation 450 may include an image (e.g., the image 151 of FIG. 1) obtained by at least partially synthesizing the plurality of first images of the operation 410. The map information of the operation 450 may include the map information (e.g., the map information 152 of FIG. 1) of the operation 440. For example, in case that only one image is determined as the image of the operation 430, the processor may generate or store a file including a determined image and map information generated using the determined image.

As described above, according to an embodiment , when generating a file that supports the HDR effect by synthesizing a plurality of images with the SDR, the processor of the electronic device may prevent or reduce distortion of at least a portion (e.g., map information) of a file due to motion (e.g., motion of a subject and/or an electronic device including a camera, such as movement, and/or rotation) which makes content of the plurality of images different. Hereinafter, an exemplary structure of the file (e.g., the file 110 of FIG. 1) generated by the operation of the electronic device 101 described with reference to FIG. 1 to FIG. 4 will be described with reference to FIG. 5.

FIG. 5 illustrates an exemplary structure of a file 110 generated by an electronic device according to an embodiment. The electronic device 101 of FIG. 1 to FIG. 2 and/or the processor 210 of FIG. 2 may perform an operation of the electronic device 101 described with reference to FIG. 5. The file 110 of FIG. 5 may be generated by the operation of the electronic device 101 described with reference to FIG. 3A to FIG. 3B and/or FIG. 4.

Referring to FIG. 5, a structure of the file 110 based on a format of International Standardization Organization (ISO) referred to as an EXchangeable Image File (EXIF) is illustrated. The file 110 stored in a memory (e.g., the memory 215 of FIG. 2) may start from a segment M1 in which a designated value (e.g., a value of Table 1 below) for indicating a Start Of Image of the file 110 is stored. After the segment M1, application segments (e.g., M2, M3, M4, ..., and M10) may be formed in the file 110.

Tag information may be stored in a first application segment M2 of the file 110. The tag information may include one or more strings used for indexing the file 110. Content list data M3 and/or stream data M4 to M10 may be stored in a second application segment APP2 of the file 110. In the file 110, JPEG table segments M11, M12, ..., and M15 may be formed, after the application segments M2, M3, ..., and M10. The JPEG table segment may include a Define-Quantization-Tables (DQT) segment M11 (e.g., a variable segment starting with a value of Table 1 below), a Define-Huffman-Tables (DHT) segment M12 (e.g., a variable segment starting with a value of Table 1 below), a Define-Restart-Interval (DRI) segment M13 (e.g., a fixed segment starting with a value of Table 1 below), a Start Of Frame (SOF) segment M14, and/or a Start-Of-Scan (SOS) segment M15 (e.g., a variable segment starting with a value of Table 1 below). In the file 110, JPEG compression data segment M16 may be formed, after the JPEG table segment. The file 110 may include a segment M17 (e.g., a fixed segment starting with a value of Table 1 below) in which a designated value for indicating an End Of Image of the file 110 is stored after the JPEG compression data segment M16.

In an embodiment, information stored in the file 110 based on the format of the EXIF is not limited to an example of FIG. 5. For example, the file 110 may include information having a title of Table 1.

**[Table 1]**

| Abbreviation | Value in file 110 (based on hexadecimal) | Length of information (or payload) | Title |
|---|---|---|---|
| SOI | 0xFF, 0xD8 | None | Starting point of image |
| SOF0 | 0xFF, 0xC0 | Variable | Starting point of frame (baseline discrete cosine transform (DCT)) |
| SOF2 | 0xFF, 0xC2 | Variable | Starting point of frame (progressive DCT) |
| DHT | 0xFF, 0xC4 | Variable | Huffman definition of table |
| DQT | 0xFF, 0xDB | Variable | Definition of quantization table |
| DRI | 0xFF, 0xDD | 4 bytes | Definition of restart cycle |
| SOS | 0xFF, 0xDA | Variable | Starting point of scan |
| RSTn | 0xFF, 0xDn | None | Restarting point |
| | (n = 0, ..., and 7) | | |
| APPn | 0xFF, 0xEn | Variable | Application segment (EXIF, APP1, and the like) |
| COM | 0xFF, 0xFE | Variable | Annotation (comment) |
| EOI | 0xFF, 0xD9 | None | End point of image |

In an embodiment, a composite image (e.g., the image 151 of FIG. 1) obtained from images (e.g., the plurality of images 141, 142 and 143 of FIG. 1) obtained from at least one camera (e.g., the at least one camera 225 of FIG. 2) may be stored in the JPEG compression data segment M16 in the file 110. Metadata may be stored in another segment (e.g., M2 to M10) of the file 110 different from the JPEG compression data segment M16. For example, map information 152 used to restore and/or display an HDR image may be stored in the second application segment APP2 of the file 110.

In an embodiment, a display device (e.g., the electronic device 101 of FIG. 1) supporting display of an HDR effect may detect an event for displaying an image 151 (or the file 110 including the image 151) having a gray scale of the SDR. In response to the event, the display device may obtain, from metadata of the file 110 including the image 151, the map information 152 for another portion of the image 151 visually emphasized with respect to a portion of the image 151. The display device may generate or synthesize an image 510 to be used for the HDR effect, by applying the map information 152 to the image 151. The map information 152 may indicate a portion of the image 151 to be displayed according to relatively high luminance. The display device may synthesize or generate the image 510 having a relatively large brightness deviation, by reducing or suppressing a brightness level of a portion (e.g., a portion of the image 151 associated with the ground and/or a horse) different from the portion identified by the map information 152. The display device may display the image 510 having an increased brightness deviation using an increased contrast ratio, by displaying the synthesized image 510 using a gray scale of the HDR.

Hereinafter, an exemplary operation of an electronic device that controls a display (e.g., the display 120 of FIG. 1 and/or FIG. 2) to display an image having an HDR effect using a file 110 will be described with reference to FIG. 6.

FIG. 6 illustrates an exemplary brightness level of a display of an electronic device 101 displaying an image 151 included in a file 110. The electronic device 101 of FIG. 1 to FIG. 2 and/or the processor 210 of FIG. 2 may perform an operation of the electronic device 101 described with reference to FIG. 6. A file of FIG. 6 may correspond to the file 110 of FIG. 1 to FIG. 5.

Referring to FIG. 6, different states 601 and 602 of the electronic device 101 displaying a screen for searching and/or displaying an image are illustrated. The electronic device 101 may display the screen of FIG. 6 on the display 120, in a state of executing a software application (e.g., a gallery application) for viewing an image and/or a video stored in a memory (e.g., the memory 215 of FIG. 2).

Referring to FIG. 6, the electronic device 101 may display visual objects 611, 612, and 613 for switching the screen displayed on the display 120 along a bottom edge of the display 120. A visual object 611 may be mapped to a function for displaying a list of software applications that were executed by the electronic device 101. A visual object 612 may be mapped to a function for switching to a designated screen referred to as a home screen (or a launcher screen). A visual object 613 may be mapped to a function for switching to another screen that was displayed before a screen currently being displayed on the display 120. In the screen of FIG. 6, the electronic device 101 may display options (e.g., pictures, albums, and memories) for switching the screen to be displayed through the display 120 in an area 614.

In an exemplary state 601 of FIG. 6, the electronic device 101 may display thumbnail images corresponding to each of images stored in the memory. In an embodiment in which the file 110 described with reference to FIG. 1 to FIG. 5 is stored, the electronic device 101 may display a thumbnail image 619 corresponding to the file 110. The thumbnail image 619 may be displayed using pixels of the display 120 operating within a gray scale (or a luminance scale) of the SDR. For example, the electronic device 101 may generate or display the thumbnail image 619 using at least a portion of the image 151 having the SDR in the file 110. The thumbnail image 619 may have a resolution, width, and/or height smaller than the image 151 included in the file 110.

In the state 601 of displaying a screen including the thumbnail image 619, luminance of the display 120 of the electronic device 101 may be distributed within a relatively small size scale based on the SDR. Referring to FIG. 6, in the state 601, a minimum luminance l1 and a maximum luminance l2 of pixels of the display 120 are illustrated. Between the minimum luminance 11 and the maximum luminance l2, the pixels (e.g., pixels corresponding to the thumbnail image 619) may be controlled according to brightness levels of 256 steps (e.g., brightness levels indicated according to a bit depth of 8-bit of the SDR). A ratio (e.g., a contrast ratio) between the maximum luminance l2 and the minimum luminance l1 may be approximately 250:1 (or 256:1).

In the exemplary state 601 of FIG. 6, the electronic device 101 may receive an input associated with the thumbnail image 619, while displaying the thumbnail image 619 having a first dynamic range based on the SDR. The input may include a touch input (e.g., a tap gesture) on a portion of the display 120 on which the thumbnail image 619 is displayed. The input may be performed to display an image (e.g., the file 110 in FIG. 1 and/or the image 151 in the file 110) corresponding to the thumbnail image 619. For example, in response to the input, the electronic device 101 may detect an event for displaying the image having the SDR while a brightness level of the display 120 is set to a first brightness level associated with the SDR.

In response to an input for the thumbnail image 619 corresponding to a file (e.g., the file 110 of FIG. 1) supporting the HDR effect, the electronic device 101 may switch to a state 602 for controlling the display 120 in the HDR. In the state 602, the electronic device 101 may synthesize the image 510 for the HDR effect, by using an image of the SDR and metadata included in the file. The image 510 may be generated by applying the map information 152 to the image 151 having the SDR, as described above with reference to FIG. 5. The map information 152 may be generated by a portion of images determined based on motion within a time section in which the images are obtained, among the images (e.g., the images 141, 142 and 143 of FIG. 1) having the gray scale of the SDR. The map information 152 may be a grayscale image. A portion of the images may be determined based on locations of feature points of the images.

In the state 602 of displaying an execution screen in which the image 510 is disposed, the electronic device 101 may control pixels of a display area 629 of the display 120 corresponding to the image 510 such that the pixels of the display area 629 operate at a brightness level associated with the HDR. In the state 602, the electronic device 101 may control pixels in a remaining display area different from the display area 629 to operate at a brightness level associated with a dynamic range (e.g., the SDR) different from the HDR. For example, the electronic device 101 may control the display 120 to operate in a gray scale of the HDR that is wider than the gray scale of the SDR, in order to provide the image 510 in response to the event. For example, in order to display the image 510, the electronic device 101 may control the display 120 operating in the gray scale of the HDR.

Referring to FIG. 6, in the state 602 of displaying the image 510 based on the HDR, minimum luminance l3 and maximum luminance l4 of pixels of the display 120 are illustrated. A deviation (or a contrast ratio) between the maximum luminance l4 and the minimum luminance l3 may be greater than the deviation (or the contrast ratio) between the maximum luminance l2 and the minimum luminance l1 in the state 601 in which the display 120 is controlled based on the SDR. Between the maximum luminance l4 and the minimum luminance l3, the pixels of the display 120 may be controlled by brightness levels (e.g., a brightness level indicated according to a bit depth of 10-bit of the HDR) of a step (e.g., 2¹⁰ = 1024) that is greater than 256 steps.

Referring to FIG. 6, in luminance area, the minimum luminance 11 in the state 601 in which the display 120 is controlled based on the SDR and the minimum luminance l3 in the state 602 in which the display 120 is controlled based on the HDR may have a relatively small difference or may be the same. In the luminance area, the maximum luminance l2 in the state 601 in which the display 120 is controlled based on the SDR and the maximum luminance l4 in the state 602 in which the display 120 is controlled based on the HDR may have a relatively large difference.

In the state 602 of controlling the display 120 based on the HDR, the electronic device 101 may display a visual object 624 to guide visualizing the image 151 on the display 120 using the HDR effect. For example, the visual object 624 including a designated text such as "HDR ON" is illustrated, but an embodiment is not limited thereto. In the state 602, the electronic device 101 may display an area 621 including visual objects (e.g., visual objects corresponding to functions such as likes, rename, share, and/or delete) that provide a function associated with the image 151. In the state 602, the electronic device 101 may display a visual object 622 for returning to the state 601 before the state 602. In the state 602, the electronic device 101 may display a visual object 623 for displaying a menu including options associated with the file 110.

As described above, according to an embodiment, the electronic device 101 may generate a file (e.g., the file 110 of FIG. 1) that includes information for displaying an image having the gray scale of the SDR and information (e.g., the map information 152 of FIG. 1) for displaying the image using the gray scale of the HDR. The electronic device 101 may generate a file by selecting a portion of a plurality of images. For example, in order to reduce distortion caused by motion of a subject and/or the electronic device 101, which occurred when shooting the images, the electronic device 101 may select a portion of the plurality of images.

FIG. 7 is a block diagram illustrating an electronic device 701 in a network environment 700 according to various embodiments. Referring to FIG. 7, the electronic device 701 in the network environment 700 may communicate with an electronic device 702 via a first network 798 (e.g., a short-range wireless communication network), or at least one of an electronic device 704 or a server 708 via a second network 799 (e.g., a long-range wireless communication network). According to an embodiment, the electronic device 701 may communicate with the electronic device 704 via the server 708. According to an embodiment, the electronic device 701 may include a processor 720, a memory 730, an input module 750, a sound output module 755, a display module 760, an audio module 770, a sensor module 776, an interface 777, a connecting terminal 778, a haptic module 779, a camera module 780, a power management module 788, a battery 789, a communication module 790, a subscriber identification module (SIM) 796, or an antenna module 797. In some embodiments, at least one of the components (e.g., the connecting terminal 778) may be omitted from the electronic device 701, or one or more other components may be added in the electronic device 701. In some embodiments, some of the components (e.g., the sensor module 776, the camera module 780, or the antenna module 797) may be implemented as a single component (e.g., the display module 760).

The processor 720 may execute, for example, software (e.g., a program 740) to control at least one other component (e.g., a hardware or software component) of the electronic device 701 coupled with the processor 720, and may perform various data processing or computation. According to an embodiment, as at least part of the data processing or computation, the processor 720 may store a command or data received from another component (e.g., the sensor module 776 or the communication module 790) in volatile memory 732, process the command or the data stored in the volatile memory 732, and store resulting data in non-volatile memory 734. According to an embodiment, the processor 720 may include a main processor 721 (e.g., a central processing unit (CPU) or an application processor (AP)), or an auxiliary processor 723 (e.g., a graphics processing unit (GPU), a neural processing unit (NPU), an image signal processor (ISP), a sensor hub processor, or a communication processor (CP)) that is operable independently from, or in conjunction with, the main processor 721. For example, when the electronic device 701 includes the main processor 721 and the auxiliary processor 723, the auxiliary processor 723 may be adapted to consume less power than the main processor 721, or to be specific to a specified function. The auxiliary processor 723 may be implemented as separate from, or as part of the main processor 721.

The auxiliary processor 723 may control at least some of functions or states related to at least one component (e.g., the display module 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). According to an embodiment, the auxiliary processor 723 (e.g., an image signal processor or a communication processor) may be implemented as part of another component (e.g., the camera module 780 or the communication module 790) functionally related to the auxiliary processor 723. According to an embodiment, the auxiliary processor 723 (e.g., the neural processing unit) may include a hardware structure specified for artificial intelligence model processing. An artificial intelligence model may be generated by machine learning. Such learning may be performed, e.g., by the electronic device 701 where the artificial intelligence is performed or via a separate server (e.g., the server 708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734.

The program 740 may be stored in the memory 730 as software, and may include, for example, an operating system (OS) 742, middleware 744, or an application 746.

The input module 750 may receive a command or data to be used by another component (e.g., the processor 720) of the electronic device 701, from the outside (e.g., a user) of the electronic device 701. The input module 750 may include, for example, a microphone, a mouse, a keyboard, a key (e.g., a button), or a digital pen (e.g., a stylus pen).

The sound output module 755 may output sound signals to the outside of the electronic device 701. The sound output module 755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 760 may visually provide information to the outside (e.g., a user) of the electronic device 701. The display module 760 may include, for example, a display, a hologram device, or a projector and control circuitry to control a corresponding one of the display, hologram device, and projector. According to an embodiment, the display module 760 may include a touch sensor adapted to detect a touch, or a pressure sensor adapted to measure the intensity of force incurred by the touch.

The audio module 770 may convert a sound into an electrical signal and vice versa. According to an embodiment, the audio module 770 may obtain the sound via the input module 750, or output the sound via the sound output module 755 or a headphone of an external electronic device (e.g., an electronic device 702) directly (e.g., wiredly) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. According to an embodiment, the sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device (e.g., the electronic device 702) directly (e.g., wiredly) or wirelessly. According to an embodiment, the interface 777 may include, for example, a high definition multimedia interface (HDMI), a universal serial bus (USB) interface, a secure digital (SD) card interface, or an audio interface.

A connecting terminal 778 may include a connector via which the electronic device 701 may be physically connected with the external electronic device (e.g., the electronic device 702). According to an embodiment, the connecting terminal 778 may include, for example, an HDMI connector, a USB connector, a SD card connector, or an audio connector (e.g., a headphone connector).

The haptic module 779 may convert an electrical signal into a mechanical stimulus (e.g., a vibration or a movement) or electrical stimulus which may be recognized by a user via his tactile sensation or kinesthetic sensation. According to an embodiment, the haptic module 779 may include, for example, a motor, a piezoelectric element, or an electric stimulator.

The camera module 780 may capture a still image or moving images. According to an embodiment, the camera module 780 may include one or more lenses, image sensors, image signal processors, or flashes.

The power management module 788 may manage power supplied to the electronic device 701. According to an embodiment, the power management module 788 may be implemented as at least part of, for example, a power management integrated circuit (PMIC).

The battery 789 may supply power to at least one component of the electronic device 701. According to an embodiment, the battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the application processor (AP)) and supports a direct (e.g., wired) communication or a wireless communication. According to an embodiment, the communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as Bluetooth^{™}, wireless-fidelity (Wi-Fi) direct, or infrared data association (IrDA)) or the second network 799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The wireless communication module 792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 792 may support a high-frequency band (e.g., the mmWave band) to achieve, e.g., a high data transmission rate. The wireless communication module 792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 792 may support various requirements specified in the electronic device 701, an external electronic device (e.g., the electronic device 704), or a network system (e.g., the second network 799). According to an embodiment, the wireless communication module 792 may support a peak data rate (e.g., 20Gbps or more) for implementing eMBB, loss coverage (e.g., 764dB or less) for implementing mMTC, or U-plane latency (e.g., 0.5ms or less for each of downlink (DL) and uplink (UL), or a round trip of 7ms or less) for implementing URLLC.

The antenna module 797 may transmit or receive a signal or power to or from the outside (e.g., the external electronic device) of the electronic device 701. According to an embodiment, the antenna module 797 may include an antenna including a radiating element composed of a conductive material or a conductive pattern formed in or on a substrate (e.g., a printed circuit board (PCB)). According to an embodiment, the antenna module 797 may include a plurality of antennas (e.g., array antennas). In such a case, at least one antenna appropriate for a communication scheme used in the communication network, such as the first network 798 or the second network 799, may be selected, for example, by the communication module 790 (e.g., the wireless communication module 792) from the plurality of antennas. The signal or the power may then be transmitted or received between the communication module 790 and the external electronic device via the selected at least one antenna. According to an embodiment, another component (e.g., a radio frequency integrated circuit (RFIC)) other than the radiating element may be additionally formed as part of the antenna module 797.

According to various embodiments, the antenna module 797 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 701 and the external electronic device 704 via the server 708 coupled with the second network 799. Each of the electronic devices 702 or 704 may be a device of a same type as, or a different type, from the electronic device 701. According to an embodiment, all or some of operations to be executed at the electronic device 701 may be executed at one or more of the external electronic devices 702, 704, or the server 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 701. The electronic device 701 may provide the outcome, with or without further processing of the outcome, as at least part of a reply to the request. To that end, a cloud computing, distributed computing, mobile edge computing (MEC), or client-server computing technology may be used, for example. The electronic device 701 may provide ultra low-latency services using, e.g., distributed computing or mobile edge computing. In another embodiment, the external electronic device 704 may include an internet-of-things (IoT) device. The server 708 may be an intelligent server using machine learning and/or a neural network. According to an embodiment, the external electronic device 704 or the server 708 may be included in the second network 799. The electronic device 701 may be applied to intelligent services (e.g., smart home, smart city, smart car, or healthcare) based on 5G communication technology or IoT-related technology.

Fig. 8 is a block diagram 800 illustrating the camera module 780 according to various embodiments. Referring to Fig. 8, the camera module 780 may include a lens assembly 810, a flash 820, an image sensor 830, an image stabilizer 840, a memory 850 (e.g., a buffer memory), or an image signal processor 860. The lens assembly 810 may collect light emitted or reflected from an object whose image is to be taken. The lens assembly 810 may include one or more lenses. According to an embodiment, the camera module 780 may include a plurality of lens assemblies 810. In such a case, the camera module 780 may form, for example, a dual camera, a 360-degree camera, or a spherical camera. Some of the plurality of lens assemblies 810 may have the same lens attribute (e.g., view angle, focal length, auto-focusing, f number, or optical zoom), or at least one lens assembly may have one or more lens attributes different from those of another lens assembly. The lens assembly 810 may include, for example, a wide-angle lens or a telephoto lens.

The flash 820 may emit light that is used to reinforce light reflected from an object. According to an embodiment, the flash 820 may include one or more light emitting diodes (LEDs) (e.g., a red-green-blue (RGB) LED, a white LED, an infrared (IR) LED, or an ultraviolet (UV) LED) or a xenon lamp. The image sensor 830 may obtain an image corresponding to an object by converting light emitted or reflected from the object and transmitted via the lens assembly 810 into an electrical signal. According to an embodiment, the image sensor 830 may include one selected from image sensors having different attributes, such as an RGB sensor, a black-and-white (BW) sensor, an IR sensor, or a UV sensor, a plurality of image sensors having the same attribute, or a plurality of image sensors having different attributes. Each image sensor included in the image sensor 830 may be implemented using, for example, a charged coupled device (CCD) sensor or a complementary metal oxide semiconductor (CMOS) sensor.

The image stabilizer 840 may move the image sensor 830 or at least one lens included in the lens assembly 810 in a particular direction, or control an operational attribute (e.g., adjust the read-out timing) of the image sensor 830 in response to the movement of the camera module 780 or the electronic device 701 including the camera module 780. This allows compensating for at least part of a negative effect (e.g., image blurring) by the movement on an image being captured. According to an embodiment, the image stabilizer 840 may sense such a movement by the camera module 780 or the electronic device 701 using a gyro sensor (not shown) or an acceleration sensor (not shown) disposed inside or outside the camera module 780. According to an embodiment, the image stabilizer 840 may be implemented, for example, as an optical image stabilizer. The memory 850 may store, at least temporarily, at least part of an image obtained via the image sensor 830 for a subsequent image processing task. For example, if image capturing is delayed due to shutter lag or multiple images are quickly captured, a raw image obtained (e.g., a Bayer-patterned image, a high-resolution image) may be stored in the memory 850, and its corresponding copy image (e.g., a low-resolution image) may be previewed via the display module 760. Thereafter, if a specified condition is met (e.g., by a user's input or system command), at least part of the raw image stored in the memory 850 may be obtained and processed, for example, by the image signal processor 860. According to an embodiment, the memory 850 may be configured as at least part of the memory 730 or as a separate memory that is operated independently from the memory 730.

The image signal processor 860 may perform one or more image processing with respect to an image obtained via the image sensor 830 or an image stored in the memory 850. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 860 may perform control (e.g., exposure time control or read-out timing control) with respect to at least one (e.g., the image sensor 830) of the components included in the camera module 780. An image processed by the image signal processor 860 may be stored back in the memory 850 for further processing, or may be provided to an external component (e.g., the memory 730, the display module 760, the electronic device 702, the electronic device 704, or the server 708) outside the camera module 780. According to an embodiment, the image signal processor 860 may be configured as at least part of the processor 720, or as a separate processor that is operated independently from the processor 720. If the image signal processor 860 is configured as a separate processor from the processor 720, at least one image processed by the image signal processor 860 may be displayed, by the processor 720, via the display module 760 as it is or after being further processed.

According to an embodiment, the electronic device 701 may include a plurality of camera modules 780 having different attributes or functions. In such a case, at least one of the plurality of camera modules 780 may form, for example, a wide-angle camera and at least another of the plurality of camera modules780 may form a telephoto camera. Similarly, at least one of the plurality of camera modules 780 may form, for example, a front camera and at least another of the plurality of camera modules780 may form a rear camera.

FIG. 9 is a block diagram 900 illustrating the display module 760 according to various embodiments. Referring to FIG. 9, the display module 760 may include a display 910 and a display driver integrated circuit (DDI) 930 to control the display 910. The DDI 930 may include an interface module 931, a memory 933 (e.g., a buffer memory), an image processing module 935, or a mapping module 937. The DDI 930 may receive image information that contains image data or an image control signal corresponding to a command to control the image data from another component of the electronic device 701 via the interface module 931. For example, according to an embodiment, the image information may be received from the processor 720 (e.g., the main processor 721 (e.g., an application processor)) or the auxiliary processor 723 (e.g., a graphics processing unit) operated independently from the function of the main processor 721. The DDI 930 may communicate, for example, with touch circuitry 950 or the sensor module 776 via the interface module 931. The DDI 930 may also store at least part of the received image information in the memory 933, for example, on a frame by frame basis. The image processing module 935 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 910. The mapping module 937 may generate a voltage value or a current value corresponding to the image data preprocessed or post-processed by the image processing module 935. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 910 may be driven, for example, based at least in part on the voltage value or the current value such that visual information (e.g., a text, an image, or an icon) corresponding to the image data may be displayed via the display 910.

According to an embodiment, the display module 760 may further include the touch circuitry 950. The touch circuitry 950 may include a touch sensor 951 and a touch sensor IC 953 to control the touch sensor 951. The touch sensor IC 953 may control the touch sensor 951 to sense a touch input or a hovering input with respect to a certain position on the display 910. To achieve this, for example, the touch sensor 951 may detect (e.g., measure) a change in a signal (e.g., a voltage, a quantity of light, a resistance, or a quantity of one or more electric charges) corresponding to the certain position on the display 910. The touch circuitry 950 may provide input information (e.g., a position, an area, a pressure, or a time) indicative of the touch input or the hovering input detected via the touch sensor 951 to the processor 720. According to an embodiment, at least part (e.g., the touch sensor IC 953) of the touch circuitry 950 may be formed as part of the display 910 or the DDI 930, or as part of another component (e.g., the auxiliary processor 723) disposed outside the display module 760.

According to an embodiment, the display module 760 may further include at least one sensor (e.g., a fingerprint sensor, an iris sensor, a pressure sensor, or an illuminance sensor) of the sensor module 776 or a control circuit for the at least one sensor. In such a case, the at least one sensor or the control circuit for the at least one sensor may be embedded in one portion of a component (e.g., the display 910, the DDI 930, or the touch circuitry 950)) of the display module 760. For example, when the sensor module 776 embedded in the display module 760 includes a biometric sensor (e.g., a fingerprint sensor), the biometric sensor may obtain biometric information (e.g., a fingerprint image) corresponding to a touch input received via a portion of the display 910. As another example, when the sensor module 776 embedded in the display module 760 includes a pressure sensor, the pressure sensor may obtain pressure information corresponding to a touch input received via a partial or whole area of the display 910. According to an embodiment, the touch sensor 951 or the sensor module 776 may be disposed between pixels in a pixel layer of the display 910, or over or under the pixel layer.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 740) including one or more instructions that are stored in a storage medium (e.g., internal memory 736 or external memory 738) that is readable by a machine (e.g., the electronic device 701). For example, a processor (e.g., the processor 720) of the machine (e.g., the electronic device 701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 701 of FIG. 7 may be an example of the electronic device 101 of FIG. 1 to FIG. 6.

In an embodiment, a method of improving quality of information used to display an image having an HDR effect may be required. As described above, according to an embodiment, an electronic device (e.g., the electronic device 101 of FIG. 1 and/or the electronic device 701 of FIG. 7) may comprise at least one camera (e.g., the at least one camera 225 of FIG. 2), at least one processor (e.g., the processor 210 of FIG. 2) comprising processing circuitry, and memory (e.g., the memory 215 of FIG. 2) comprising one or more storage mediums storing instructions. The instructions that, when executed by the at least one processor individually or collectively, may cause the electronic device to, in response to a shooting input, obtain a plurality of first images (e.g., the images 141, 142 and 143 of FIG. 1) including brightness values respectively having a first gray scale from the at least one camera. The instructions that, when executed by the at least one processor individually or collectively, may cause the electronic device to, by using information associated with motion in a time section when the plurality of first images were captured, determine an image among the plurality of first images as a second image (e.g., the image 151 of FIG. 1) to generate map information (e.g., the map information 152 of FIG. 1). The instructions that, when executed by the at least one processor individually or collectively, may cause the electronic device to, generate the map information using the second image. The instructions that, when executed by the at least one processor individually or collectively, may cause the electronic device to generate a file including metadata including the map information and the second image. According to an embodiment, the electronic device may improve quality of the map information used to display an image having an HDR effect.

For example, the instructions that, when executed by the at least one processor individually or collectively, may cause the electronic device to identify the second image for the map information by deleting, among the plurality of first images, remaining images different from the image determined as the second image using the information.

For example, the number of images used to generate the map information among the plurality of first images may be changed according to a size of the motion indicated by the information.

For example, the map information may include values to adjust the brightness values included in the second image for another portion of the second image visually highlighted with respect to a portion of the second image through the display device.

For example, the map information may indicate a two-dimensional array including degrees to enhance brightness of distinct portions of the second image. A width and a height of the two-dimensional array may be smaller than a width and a height of the second image.

For example, the instructions that, when executed by the at least one processor individually or collectively, may cause the electronic device to determine feature points included in the plurality of first images. The instructions that, when executed by the at least one processor individually or collectively, may cause the electronic device to obtain, as the information associated with the motion, information with respect to differences between locations of the feature points.

For example, the instructions that, when executed by the at least one processor individually or collectively, may cause the electronic device to determine a reference image from among the plurality of first images. The instructions that, when executed by the at least one processor individually or collectively, may cause the electronic device to, based on the determined reference image, determine distances between locations of feature points in the reference image and locations of feature points in another image different from the reference image among the plurality of first images. The instructions that, when executed by the at least one processor individually or collectively, may cause the electronic device to determine whether to use the other image to generate the map information based on whether at least one of the distances is greater than a ratio between sizes of the other image and the map information.

For example, the instructions that, when executed by the at least one processor individually or collectively, may cause the electronic device to, based on whether the number of at least one image determined to generate the information among the plurality of first images is lower than or equal to a preset number, obtain one or more third images including brightness values having the first gray scale by controlling the at least one camera.

For example, the instructions that, when executed by the at least one processor individually or collectively, may cause the electronic device to, change at least one of a shutter speed, an international standard organization (ISO) sensitivity, or an exposure value among attributes of the at least one camera which were used to obtain the plurality of first images. The instructions that, when executed by the at least one processor individually or collectively, may cause the electronic device to obtain the one or more third images by controlling the at least one camera having the changed at least one attribute.

As described above, in an embodiment, a method of an electronic device comprising at least one camera may be provided. The method may comprise, in response to a shooting input, obtaining a plurality of first images including brightness values respectively having a first gray scale from the at least one camera. The method may comprise, by using information associated with motion in a time section when the plurality of first images were captured, determining an image among the plurality of first images as a second image to generate map information. The method may comprise generating the map information using the second image. The method may comprise generating a file including metadata including the map information and the second image.

For example, the determining may comprise identifying the second image for the map information by deleting, among the plurality of first images, remaining images different from the image determined as the second image using the information.

For example, the number of images used to generate the map information among the plurality of first images may be changed according to a size of the motion indicated by the information.

For example, the map information may include values to adjust the brightness values included in the second image for another portion of the second image visually highlighted with respect to a portion of the second image through the display device.

For example, the map information may indicate a two-dimensional array including degrees to enhance brightness of distinct portions of the second image. A width and a height of the two-dimensional array may be smaller than a width and a height of the second image.

For example, the determining may comprise determining feature points included in the plurality of first images. The determining may comprise obtaining, as the information associated with the motion, information with respect to differences between locations of the feature points.

For example, the determining may comprise determining a reference image from among the plurality of first images. The determining may comprise based on the determined reference image determining distances between locations of feature points in the reference image and locations of feature points in another image different from the reference image among the plurality of first images. The determining may comprise determining whether to use the another image to generate the map information based on whether at least one of the distances is greater than a ratio between sizes of the another image and the map information.

For example, the method may comprise based on whether the number of at least one image determined to generate the information among the plurality of first images is lower than or equal to a preset number, obtaining one or more third images including brightness values having the first gray scale by controlling the at least one camera.

For example, the obtaining the one or more third images may comprise changing at least one of a shutter speed, an ISO sensitivity, or an exposure value among attributes of the at least one camera which were used to obtain the plurality of first images. The obtaining the one or more third images may comprise obtaining the one or more third images by controlling the at least one camera having the changed at least one attribute.

In an embodiment, a non-transitory computer readable medium storing instructions may be provided. The instructions that, when executed by at least one processor of an electronic device including at least one camera, may cause the electronic device to, in response to a shooting input, obtain a plurality of first images including brightness values respectively having a first gray scale from the at least one camera. The instructions that, when executed by the at least one processor, may cause the electronic device to, by using information associated with motion in a time section when the plurality of first images were captured, determine an image among the plurality of first images as a second image to generate map information. The instructions that, when executed by the at least one processor, may cause the electronic device to generate the map information using the second image. The instructions that, when executed by the at least one processor, may cause the electronic device to generate a file including metadata including the map information and the second image.

As described above, according to an embodiment, an electronic device may comprise a display, at least one processor comprising processing circuitry, and a memory storing instructions, comprising at least one storage medium. The instructions that, when executed by the at least one processor individually or collectively, may cause the electronic device to detect an event to display a first image having a first gray scale. The instructions that, when executed by the at least one processor individually or collectively, may cause the electronic device to, in response to the event, obtain map information, from metadata in a file including the first image, for a portion of the first image that is visually highlighted with respect to another portion of the first image. The instructions that, when executed by the at least one processor individually or collectively, may cause the electronic device to generate a second image by applying the map information to the first image. The instructions that, when executed by the at least one processor individually or collectively, may cause the electronic device to control the display to be operated in a second gray scale that is wider than the first gray scale to provide the second image in response to the event. The instructions that, when executed by the at least one processor individually or collectively, may cause the electronic device to control the display that is operated in the second gray scale to display the second image. The map information may be generated, based on motion in a time section when a plurality of third images were obtained, by using the first image determined among the plurality of third images having the first gray scale.

For example, the map information may be generated by the first image that is determined among the plurality of third images based on locations of feature points.

As described above, in an embodiment, a non-transitory computer readable medium storing instructions may be provided. The instructions that, when executed by an electronic device including a display, may cause the electronic device to detect an event to display a first image having a first gray scale. The instructions that, when executed by the electronic device, may cause the electronic device to, in response to the event, obtain map information, from metadata in a file including the first image, for a portion of the first image that is visually highlighted with respect to another portion of the first image. The instructions that, when executed by the electronic device, may cause the electronic device to generate a second image by applying the map information to the first image. The instructions that, when executed by the electronic device, may cause the electronic device to control the display to be operated in a second gray scale that is wider than the first gray scale to provide the second image in response to the event. The instructions that, when executed by the electronic device, may cause the electronic device to control the display that is operated in the second gray scale to display the second image. The map information may be generated, based on motion in a time section when a plurality of third images were obtained, by using the first image determined among the plurality of third images having the first gray scale.

For example, the map information may be generated by the first image that is determined among the plurality of third images based on locations of feature points.

The effects obtained from the present disclosure are not limited to the effects described above, and other effects not mentioned will be clearly understood by those having ordinary knowledge in the art to which the present disclosure belongs.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101; 701), comprising:
at least one camera (225);
at least one processor (210) comprising processing circuitry; and
a memory (215) storing instructions, comprising at least one storage medium,
memory comprising one or more storage media storing instructions that, when executed by the at least one processor (210) individually or collectively, cause the electronic device (101; 701) to:
in response to a shooting input, obtain a plurality of first images including brightness values respectively having a first gray scale from the at least one camera (225);
by using information associated with motion in a time section when the plurality of first images were captured, determine an image among the plurality of first images as a second image to generate map information;
generate the map information using the second image; and
generate a file including metadata including the map information and the second image.

2. The electronic device (101; 701) of claim 1, wherein the instructions that, when executed by the at least one processor (210) individually or collectively, cause the electronic device (101; 701) to:
identify the second image for the map information by deleting, among the plurality of first images, remaining images different from the image determined as the second image using the information.

3. The electronic device (101; 701) of one of the claim 1 to claim 2, wherein the instructions that, when executed by the at least one processor (210) individually or collectively, cause the electronic device (101; 701) to:
change a number of images used to generate the map information among the plurality of first images according to a size of the motion indicated by the information.

4. The electronic device (101 ; 701) of one of claim 1 to claim 3, wherein the map information includes values to adjust the brightness values included in the second image for another portion of the second image visually highlighted with respect to a portion of the second image through the display device; and/or
wherein the map information indicates a two-dimensional array including degrees to enhance brightness of distinct portions of the second image, and
wherein a width and a height of the two-dimensional array is smaller than a width and a height of the second image.

5. The electronic device (101; 701) of one of claim 1 to claim 4, wherein the instructions that, when executed by the at least one processor (210) individually or collectively, cause the electronic device (101; 701) to:
determine feature points included in the plurality of first images; and
obtain, as the information associated with the motion, information with respect to differences between locations of the feature points.

6. The electronic device (101; 701) of one of claim 1 to claim 5, wherein the instructions that, when executed by the at least one processor (210) individually or collectively, cause the electronic device (101; 701) to:
determine a reference image from among the plurality of first images;
based on the determined reference image:
determine distances between locations of feature points in the reference image and locations of feature points in another image different from the reference image among the plurality of first images; and
determine whether to use the another image to generate the map information based on whether at least one of the distances is greater than a ratio between sizes of the another image and the map information.

7. The electronic device (101 ; 701) of one of claim 1 to claim 6, wherein the instructions that, when executed by the at least one processor (210) individually or collectively, cause the electronic device (101 ; 701) to:
based on whether a number of at least one image determined to generate the information among the plurality of first images is lower than or equal to a preset number, obtain one or more third images including brightness values having the first gray scale by controlling the at least one camera (225).

8. The electronic device (101; 701) of one of the claim 1 to claim 7, wherein the instructions that, when executed by the at least one processor (210) individually or collectively, cause the electronic (101; 701) device to:
change at least one of a shutter speed, an international standard organization, ISO, sensitivity, or an exposure value among attributes of the at least one camera (225) which were used to obtain the plurality of first images; and
obtain the one or more third images by controlling the at least one camera (225) having the changed at least one attribute.

9. A method of an electronic device (101; 701) comprising at least one camera (225), comprising:
in response to a shooting input, obtaining a plurality of first images including brightness values respectively having a first gray scale from the at least one camera (225);
by using information associated with motion in a time section when the plurality of first images were captured, determining an image among the plurality of first images as a second image to generate map information;
generating the map information using the second image; and
generating a file including metadata including the map information and the second image.

10. The method of claim 9, wherein the determining comprising:
identifying the second image for the map information by deleting, among the plurality of first images, remaining images different from the image determined as the second image using the information.

11. The method of one of claim 9 to claim 10, wherein a number of images used to generate the map information among the plurality of first images is changed according to a size of the motion indicated by the information.

12. The method of one of claim 9 to claim 11, wherein the map information includes values to adjust the brightness values included in the second image for another portion of the second image visually highlighted with respect to a portion of the second image through the display device.

13. The method of one of claim 9 to claim 12, wherein the map information indicates a two-dimensional array including degrees to enhance brightness of distinct portions of the second image,
wherein a width and a height of the two-dimensional array is smaller than a width and a height of the second image.

14. The method of one of claim 9 to claim 13, wherein the determining comprising:
determining feature points included in the plurality of first images; and
obtaining, as the information associated with the motion, information with respect to differences between locations of the feature points.

15. A non-transitory computer readable medium storing instructions that, when executed by at least one processor (210) of an electronic device (101; 701) including at least one camera (225), cause the electronic device to perform one of the methods of claims 9-14.
